# EUROPÄISCHE PATENTANMELDUNG

(11) **EP 0 908 970 A1**
(43) Veröffentlichungstag der Anmeldung: **14.04.1999**
(21) Anmeldenummer: 98113566.8
(22) Anmeldetag: 20.07.1998
(51) Int. Cl.: H01R 13/506, H01R 13/436

(54) **Hybrides HF-Steckverbindungssystem**

(30) Priorität: 13.10.1997 DE 19745227
(71) Anmelder: SIEMENS AKTIENGESELLSCHAFT, 80333 München (DE)
(72) Erfinder: Sträb, Martin, 86911 Diessen (DE); Dessin, Jan, 8370 Blankenberge (BE)

(57) **Zusammenfassung**

Das erfindungsgemäße hybride HF-Steckverbindungssystem umfaßt ein Gehäuse 1, welches zumindest ein HF-Steckerteil 1a sowie zumindest ein weiteres Steckerteil 1b für zumindest eine weitere Signalleitung aufweist, wobei diese weitere Signalleitung keine HF-Leitung ist. Durch diese Ausbildung des hybriden HF-Steckverbindungssystems ist eine einfache Montage von unterschiedlichen Signalleitungen in einem einzigen Gehäuse 1 gewährleistet, wobei eine Vorkonfektionierung der Leitungen mit den Kontaktteilen ermöglicht ist. Das (Nicht-HF-) Steckerteil 1b kann dabei mehrere gleichartige Steckverbindungen nebeneinanderliegend aufweisen, so daß je nach Anforderung (zum Beispiel Anzahl und Typen der zu verbindenden Signalleitungen oder Form und Lage des zur Verfügung stehenden Bauraumes) eine entsprechende Anzahl von Steckverbindungen vorgesehen werden kann.

## Beschreibung

Die vorliegende Erfindung betrifft im allgemeinen ein hybrides HF-Steckverbindungssystem, und insbesondere ein hybrides HF-Steckverbindungssystem, welches in Kfz einsetzbar ist und welches verschiedenartige Signalleitungen gleichzeitig zu verbinden erlaubt.

Bisher bekannte Verbindungssysteme für lediglich zwei HF-Leitungen bestehen aus metallischen Steckern, deren Einsatz einen erheblichen Montageaufwand verursacht. Die zu verbindenden Leitungen müssen 3-fach (Ummantelungen) abisoliert werden, die Leitungen müssen angeschlagen werden, der Innenleiter muß angelötet werden, der Außenleiter muß umgebördelt werden, die Leitungen müssen durch die Steckergehäuse geführt werden und schließlich muß mittels Einführen eines Halteteils die Kontaktierung hergestellt werden.

Darüber hinaus ist ein weiterer bekannter Verbinder für Koaxialkabel in der DE-PS-36 88 284 offenbart. Der dort gezeigte Verbinder umfaßt erste Kontakteinrichtungen, die ein Isoliermaterial des Koaxialkabels durchdringen, welches den äußeren Leiter des Kabels umgibt, um einen elektrischen Kontakt mit dem äußeren Leiter herzustellen, sowie eine zweite Kontakteinrichtung, die derart ausgelegt ist, daß sie den inneren Mantel durchdringt und einen elektrischen Kontakt mit dem inneren Leiter herstellt.

Sollen zugleich mit der HF-Steckverbindung davon verschiedenartige Signalleitungen miteinander verbunden werden, müssen nach dem Stand der Technik unterschiedliche und getrennte Steckverbindungen vorgesehen werden.

Nach der DE-OS 33 30 151 ist es bekannt, ein Gehäuse für eine Mehrzahl von gleichartigen elektrischen Steckkontakten auszubilden und diese Steckkontakte mittels eines zusätzlichen Rastelementes im Steckergehäuse zu sichern. Die dort nebeneinander und gleichzeitig verbundenen Signalleitungen sind jedoch alle gleichartig.

Die Nachteile der bekannten Verbinder für HF-Leitungen und sonstige Signalleitungen sind also darin zu sehen, daß für jede Art der Signalleitung eine eigene Steckverbindung vorzusehen ist.

Demgegenüber ist es die Aufgabe der vorliegenden Erfindung, ein hybrides HF-Steckverbindungssystem zu schaffen, welches neben einer möglichst einfachen Montage auch eine Verbindung verschiedenartiger Signalleitungen in einem Gehäuse erlaubt.

Diese Aufgabe wird durch ein HF-Steckverbindungssystem gelöst, welches die Merkmale gemäß Patentanspruch 1 aufweist.

Das erfindungsgemäße hybride HF-Steckverbindungssystem nach Anspruch 1 umfaßt ein Gehäuse, welches zumindest ein HF-Steckerteil sowie zumindest ein weiteres Steckerteil für zumindest eine weitere Signalleitung aufweist, wobei diese weitere Signalleitung keine HF-Leitung ist.

Durch diese Ausbildung des hybriden HF-Steckverbindungssystems ist eine einfache Montage von unterschiedlichen Signalleitungen in einem Gehäuse gewährleistet, wobei eine Vorkonfektionierung der Leitungen mit den Kontaktteilen ermöglicht ist.

Vorteilhafte Weiterbildungen des erfindungsgemäßen HF-Steckverbindungssystems sind Gegenstand der weiteren Patentansprüche 2 bis 10.

Nach Anspruch 2 ist das Nicht-HF-Steckerteil für zumindest einen elektrischen Kontakt, vorzugsweise einen ELO-Kontakt vorgesehen sowie nach Anspruch 3 dieses Steckerteil für zumindest einen Lichtwellenleiter-Kontakt vorgesehen ist. Hierdurch wird eine einfache Kombination verschiedener Stecksysteme von unterschiedlichen Signalleitungen in einem Gehäuse erreicht. Eine Kombination der elektrischen und optischen Kontakte in einem Gehäuse ist ebenso möglich.

Nach Anspruch 4 sind in dem Nicht-HF-Steckerteil mehrere gleichartige Steckverbindungen nebeneinanderliegend vorgesehen, so daß je nach Anforderung (zum Beispiel Anzahl und Typen der zu verbindenden Signalleitungen oder Form und Lage des zur Verfügung stehenden Bauraumes) eine entsprechende Anzahl von Steckverbindungen vorgesehen werden kann.

Um auch mehrpolige Steckverbindungen zu realisieren, können nach Anspruch 5 auch mehrere HF-Steckerteile und/oder mehrere Nicht-HF-Steckerteile in dem Gehäuse vorgesehen werden.

In Übereinstimmung mit dem Anspruch 6 ist das Gehäuse vorzugsweise zweiteilig ausgeführt, so daß eine einfache Montage gewährleistet ist, wobei nach Anspruch 7 ein Oberteil des Gehäuses eine Sekundärsicherung aufweist, die die elektrischen, optischen und sonstigen Kontakte in dem Steckerteil verriegelt, wenn das Oberteil mit einem Unterteil des Gehäuses verbunden ist.

Zur werkzeuglosen Montage weist das Oberteil und das Unterteil des Gehäuses bevorzugt jeweils Rastbauteile auf, die eine Vorraststellung und eine Endraststellung ermöglichen, wobei in der Endraststellung (Gehäuse geschlossen) die Sekundärsicherung wirksam ist, während in der Vorraststellung die Kontakte in dem (dann noch offenen) Gehäuse anordenbar sind.

Nach Anspruch 9 sind die Rastbauteile vorzugsweise durch Vorsprünge an dem Oberteil des Gehäuses und durch Vertiefungen an dem Unterteil des Gehäuses ausgebildet.

Nach Anspruch 10 ist das Gehäuse aus einem (z.B. elektrisch und/oder optisch) isolierenden Material, vorzugsweise aus einem Kunststoff gefertigt, um ein Übersprechen zwischen den Signalleitungen zu verhindern.

Die vorliegende Erfindung wird im folgenden anhand eines bevorzugten Ausführungsbeispiels näher erläutert. In den Zeichnungen zeigt bzw. zeigen:
Fig. 1 eine Querschnittansicht eines hybriden HF-Steckverbindungssystems in einer Vorraststellung; und
Fig. 2 eine Querschnittansicht des hybriden HF-Steckverbindungssystems in einer Endraststellung.

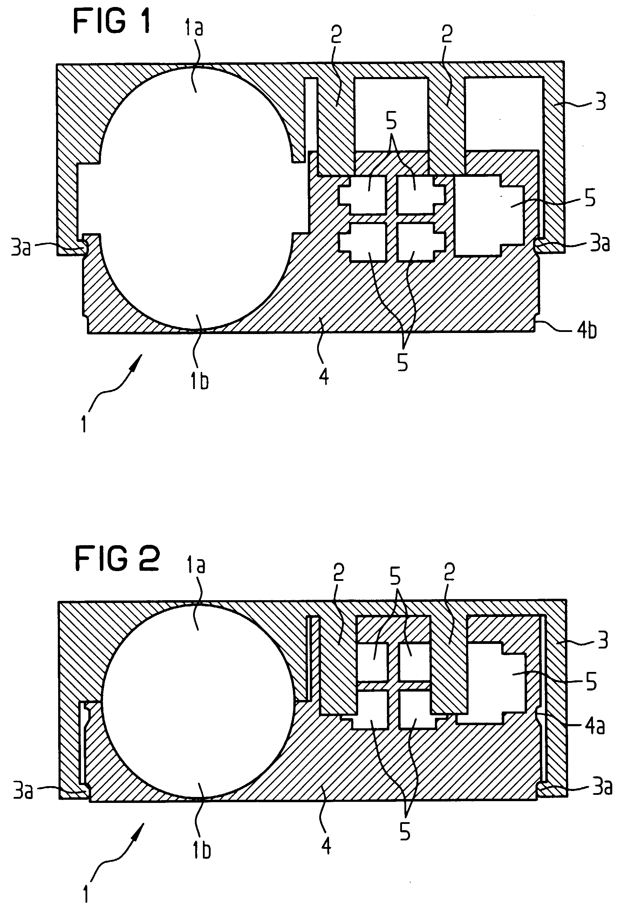

In der Figur 1 ist im Querschnitt das Gehäuse 1 in einer Vorraststellung dargestellt, wobei das Gehäuse 1 zweiteilig ausgeführt ist und ein Oberteil 3 sowie ein Unterteil 4 aufweist.

An dem Oberteil 3 ist an nach unten weisenden Schenkeln eine Mehrzahl von Vorsprüngen 3a ausgebildet, die mit zugehörigen Vertiefungen 4a und 4b an dem Unterteil 4 des Gehäuses 1 in Eingriff gelangen.

Das Gehäuse 1 weist in der Ausführungsform nach der Figur 1 ein HF-Steckerteil 1a sowie ein (Nicht-HF-) Steckerteil 1b auf. Die eigentlichen Kontakte der zu verbindenden Signalleitungen sind in den Zeichnungen nicht dargestellt. In der Vorraststellung, in der die Kontakte der zu verbindenden Signalleitungen in das Gehäuse 1 eingebracht und dort in entsprechenden Öffnungen 5 angeordnet werden, greifen die Vorsprünge 3a des Oberteils 3 des Gehäuses 1 in die Vertiefungen 4a an dem Unterteil 4 des Gehäuses 1 ein.

Eine Sekundärsicherung 2, die in der Endraststellung des Gehäuses 1 die Kontakte im Steckerteil 1b sichert, ist in der Vorraststellung außerhalb der Öffnungen 5 angeordnet.

Nach dem Einlegen bzw. Einsetzen der Kontakte (z.B. elektrische oder optische) in die Steckerteile 1a und 1b wird das Gehäuse 1 geschlossen. Hierbei gelangen die Vorsprünge 3a des Oberteils 3 mit den unteren Vertiefungen 4b des Unterteils 4 in Eingriff. In der Endraststellung, die in der Figur 2 dargestellt ist, ist das Gehäuse 1 verriegelt und die Sekundärsicherung 2 hintergreift die Kontakte in den Öffnungen 5, so daß eine zuverlässige Sicherung gegen Herausfallen der Kontakte erreicht ist.

Das hybride HF-Steckverbindungssystem nach der vorliegenden Erfindung erlaubt es somit beispielsweise einen Kabelbaum eines Kraftfahrzeuges, der aus unterschiedlichen Signalleitungen, wie etwa HF-Leitungen, niederfrequenten elektrischen Leitungen und Lichtwellenleitern besteht, mit einem einzigen Steckergehäuse zu bestücken und entsprechend vorzukonfektionieren, wodurch die Montage wesentlich vereinfacht ist.

Das einzige Steckergehäuse (Gehäuse 1) kann dabei je nach Anzahl und Typ der zu verbindenden Signalleitungen und je nach Form und Lage des zur Verfügung stehenden Bauraumes im Kfz gestaltet werden und muß nicht notwendigerweise die in den Zeichnungen dargestellte quaderförmige Ausbildung aufweisen.

Das Gehäuse 1 ist vorzugsweise aus einem Kunststoff gefertigt, um zumindest eine elektrische Isolation zu erreichen, um ein Übersprechen der Signale auf den unterschiedlichen Signalleitungen zu verhindern, sowie darüber hinaus beispielsweise eine "optische" Isolation (beispielsweise eine Reflexionsschicht) vorzusehen ist, wenn Lichtwellenleiter verbunden werden.

Das einzige Gehäuse 1 für eine Vielzahl von Signalleitungen kann mit einer Rastvorrichtung versehen werden, um es am Ort des Einsatzes einfach zu fixieren; zum Lösen dieser Fixierung ist an der Rastvorrichtung eine Taste zum Auslösen der Verrastung angeordnet (nicht dargestellt).

Schließlich ist das so ausgebildete hybride HF-Steckverbindungssystem kodierbar, so daß eine eindeutige Zuordnung gewährleistet ist. Da nur noch ein Stecker zur Verbindung verschiedener Signalleitungen erforderlich ist, ist eine sehr einfache Handhabung gegeben.

Das erfindungsgemäße hybride HF-Steckverbindungssystem umfaßt somit ein Gehäuse, welches zumindest ein HF-Steckerteil sowie zumindest ein weiteres Steckerteil für zumindest eine weitere Signalleitung aufweist, wobei diese weitere Signalleitung keine HF-Leitung ist. Durch diese Ausbildung des hybriden HF-Steckverbindungssystems ist eine einfache Montage von unterschiedlichen Signalleitungen in einem einzigen Gehäuse gewährleistet, wobei eine Vorkonfektionierung der Leitungen mit den Kontaktteilen ermöglicht ist. Das Nicht-HF-Steckerteil kann dabei mehrere gleichartige Steckverbindungen nebeneinanderliegend aufweisen, so daß je nach Anforderung (zum Beispiel Anzahl und Typen der zu verbindenden Signalleitungen oder Form und Lage des zur Verfügung stehenden Bauraumes) eine entsprechende Anzahl von Steckverbindungen vorgesehen werden kann.

## Patentansprüche

1. Hybrides HF-Steckverbindungssystem mit
einem Gehäuse (1), welches zumindest ein HF-Steckerteil (1a) sowie zumindest ein weiteres Steckerteil (1b) für zumindest eine weitere Signalleitung aufweist, wobei diese weitere Signalleitung keine HF-Leitung ist.

2. Hybrides HF-Steckverbindungssystem nach Anspruch 1,
**dadurch gekennzeichnet**, daß
das Steckerteil (1b) für zumindest einen elektrischen Kontakt, insbesondere einen ELO-Kontakt vorgesehen ist.

3. Hybrides HF-Steckverbindungssystem nach Anspruch 1,
**dadurch gekennzeichnet,** daß
das Steckerteil (1b) für zumindest einen Lichtwellenleiter-Kontakt vorgesehen ist.

4. Hybrides HF-Steckverbindungssystem nach einem der Ansprüche 1 bis 3,
**dadurch gekennzeichnet,** daß
in dem Steckerteil (1b) mehrere gleichartige Steckverbindungen in entsprechenden Öffnungen (5) nebeneinanderliegend angeordnet vorgesehen sind.

5. Hybrides HF-Steckverbindungssystem nach einem der Ansprüche 1 bis 4,
**dadurch gekennzeichnet,** daß
mehrere HF-Steckerteile (1a) und/oder mehrere Steckerteile (1b) nebeneinander in dem Gehäuse (1) vorgesehen sind.

6. Hybrides HF-Steckverbindungssystem nach einem der Ansprüche 1 bis 5,
**dadurch gekennzeichnet,** daß
das Gehäuse (1) zweiteilig (3, 4) ausgeführt ist.

7. Hybrides HF-Steckverbindungssystem nach Anspruch 6,
**dadurch gekennzeichnet,** daß
ein Oberteil (3) des Gehäuses (1) eine Sekundärsicherung (2) aufweist, die die Kontakte in dem Steckerteil (1b) verriegelt, wenn das Oberteil (3) mit einem Unterteil (4) des Gehäuses (1) verbunden ist.

8. Hybrides HF-Steckverbindungssystem nach Anspruch 7,
**dadurch gekennzeichnet,** daß
das Oberteil (3) und das Unterteil (4) des Gehäuses (1) jeweils Rastbauteile (3a, 4a, 4b) aufweisen, die eine Vorraststellung (Fig. 1) und eine Endraststellung (Fig. 2) ermöglichen, wobei in der Endraststellung die Sekundärsicherung (2) wirksam ist, während in der Vorraststellung die Kontakte in dem Gehäuse (1) anordenbar sind.

9. Hybrides HF-Steckverbindungssystem nach Anspruch 8,
**dadurch gekennzeichnet,** daß
die Rastbauteile durch Vorsprünge (3a) an dem Oberteil (3) des Gehäuses (1) und durch Vertiefungen (4a, 4b) an dem Unterteil (4) des Gehäuses (1) gebildet sind.

10. Hybrides HF-Steckverbindungssystem nach Anspruch 8,
**dadurch gekennzeichnet,** daß
das Gehäuse (1) aus einem isolierenden Material, vorzugsweise aus einem Kunststoff gefertigt ist.
